(19) Europäisches Patentamt
European Patent Office
Office européen des brevets

(11) **EP 4 769 683 A1**

(12) **EUROPEAN PATENT APPLICATION**

(43) Date of publication:
**01.07.2026   Bulletin 2026/27**

(21) Application number: **25223286.3**

(22) Date of filing: **15.12.2025**

(51) International Patent Classification (IPC):
*H01M 50/107* (2021.01)      *H01M 50/152* (2021.01)
*H01M 50/169* (2021.01)      *H01M 50/533* (2021.01)
*H01M 50/536* (2021.01)      *H01M 50/538* (2021.01)

(52) Cooperative Patent Classification (CPC):
**H01M 50/536; H01M 50/107; H01M 50/152;**
**H01M 50/169; H01M 50/533; H01M 50/538;**
**Y02E 60/10**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **26.12.2024   CN 202423235210 U**

(71) Applicant: **AESC Japan Ltd.**
**Yokohama-shi, Kanagawa 220-0012 (JP)**

(72) Inventor: **LI, Qiankun**
**Jiangyin City, Wuxi City, 214443 (CN)**

(74) Representative: **Becker, Eberhard**
**Becker Kurig & Partner**
**Patentanwälte mbB**
**Bavariastraße 7**
**80336 München (DE)**

(54) **SECONDARY BATTERY AND BATTERY PACK**

(57)   A secondary battery (100) and a battery pack (1002) are provided. The secondary battery (100) includes: an outer shell including a housing (110) and a cover plate (140) covering an opening (113) formed at an end of housing (110); an electrode assembly (130) accommodated in the outer shell and including a first electrode sheet, a separator (132), and a second electrode sheet, the first electrode sheet has a first electrode tab (300) facing the cover plate (140); a current collector plate (150) disposed between the cover plate (140) and the electrode assembly (130), and including a main body (152) welded to the first electrode tab (300) and a weld block (154) welded to the cover plate (140), a thermal conductivity coefficient of the weld block (154) is W1, a thermal conductivity coefficient of the main body (152) is W2, and W2 is greater than W1.

FIG. 6

## Description

## BACKGROUND

Technical Field

The disclosure relates to a secondary battery, a battery pack, and an electronic device.

Related Art

In the field of new energy power batteries, secondary batteries generally include, for example, electrode assemblies, outer shells, and current collector plates. The electrode assembly includes positive electrode sheets, negative electrode sheets, and separators located between the positive electrode sheets and negative electrode sheets. These positive electrode sheets, negative electrode sheets, and separators are stacked with each other and then wound into an electrode assembly, which is then packaged in the outer shell. Secondary batteries usually dispose current collector plates at positions of the housing close to the opening, so that one end of the current collector plate is welded and connected to the housing or end cover, and the other end is electrically connected to electrode tabs of the electrode assembly, thereby achieving electrical connection between the housing and the electrode assembly.

## SUMMARY

To address the problems existing in the related technology, the purpose of the disclosure lies in providing a secondary battery, a battery pack, and an electronic device to avoid the problem of internal short circuit caused by high temperature damage to the separator during welding of the cover plate and current collector plate.

To achieve the above purpose, the disclosure provides a secondary battery, including: an outer shell including a housing and a cover plate, in which an end of the housing forms an opening, and the cover plate covers the opening; an electrode assembly accommodated in the outer shell, in which the electrode assembly includes a first electrode sheet, a separator, and a second electrode sheet that are stacked and wound in sequence, the first electrode sheet has a first electrode tab facing the cover plate, and a portion of the first electrode tab exceeds an end portion of the separator facing the cover plate along a height direction of the secondary battery; a current collector plate disposed between the cover plate and the electrode assembly, in which the current collector plate includes a main body welded to the first electrode tab and a weld block welded to the cover plate, a welding direction of the weld block and the cover plate is from an outer surface of the cover plate toward the electrode assembly, a thermal conductivity coefficient of the weld block is W1, a thermal conductivity coefficient of the main body is W2, and W2 is greater than W1.

In some embodiments, W2−W1≥300 W/(m·K).

In some embodiments, the weld block is stacked on a side of the main body away from the electrode assembly, and a weld mark formed by welding the cover plate and the weld block does not exceed a bottom surface of the weld block facing the main body.

In some embodiments, a track of the weld mark extends along a circumferential direction of the cover plate, a minimum width in a radial direction of the secondary battery is greater than or equal to 0.5mm, and a maximum width is less than 1mm.

In some embodiments, a thickness of the cover plate is A, a thickness of the weld block along the height direction is B, a thickness of the main body is C, and A≤B+C.

In some embodiments, a material of the weld block is steel, and a material of the main body is copper.

In some embodiments, in a region where the first electrode tab is welded to the current collector plate, a quantity of stacked layers of the first electrode tab in the height direction is at least 3 layers for each turn.

In some embodiments, in the height direction, the first electrode tab sequentially includes a dense area welded to the main body, a loose area connected to the dense area, and a straight area connected to the loose area, the first electrode tab in the straight area extends along the height direction, and an electrode tab stacking density of the loose area is less than an electrode tab stacking density of the dense area.

In some embodiments, in the height direction, an end portion of the straight area facing the main body exceeds an end portion of the separator, and a distance that the end portion of the straight area exceeds the end portion of the separator is greater than 0.1mm.

In some embodiments, a height of the first electrode tab along the height direction is greater than or equal to 2mm, a ratio of a height of the loose area to the height of the first electrode tab is 45% to 55%, and a ratio of a height of the dense area to the height of the first electrode tab is 10% to 15%.

In some embodiments, a quantity of stacked layers of the first electrode tab in the dense area is 15 layers to 45 layers.

In some embodiments, the secondary battery further includes an insulating adhesive layer disposed between the main body of the current collector plate and the first electrode tab, a projection of the weld block along the height direction is located on the insulating adhesive layer, and a thermal conductivity coefficient of the insulating adhesive layer is less than 0.05 W/(m·K).

In some embodiments, a width of the insulating adhesive layer in a radial direction of the secondary battery is Da−1mm to Da+1mm, where Da represents a width of the weld block in the radial direction, and a unit of Da is millimeter.

In some embodiments, the housing includes a side wall surrounding the electrode assembly, an end of the side wall is an opening, the cover plate includes a groove recessed toward the current collector plate, the groove is located within the opening, and an outer wall surface of the groove faces the side wall of the housing and fits with the side wall, in which the weld block is welded between the groove and the main body.

In some embodiments, the weld block is annular extending along an edge of the current collector plate, a thickness of the cover plate is A, an inner diameter of the side wall of the housing is D4, a minimum value of an outer diameter of the weld block is equal to D4-2×A, an inner diameter of the weld block is D1, an outer diameter of the electrode assembly is D3, and D1/D3>0.75.

Embodiments of the disclosure further provide a battery pack including the secondary battery of any one of the above.

Embodiments of the disclosure further provide an electronic device including the above battery pack.

## BRIEF DESCRIPTION OF THE DRAWINGS

In order to more clearly describe the technical solutions in the embodiments of the disclosure or the related art, the drawings required for use in the description of the embodiments or the related art will be briefly introduced below. Certainly, the drawings in the following description are some embodiments of the disclosure. For persons of ordinary skill in the art, other drawings may also be obtained according to these drawings without creative labor.

FIG. 1 shows a perspective view of a secondary battery according to an embodiment of the disclosure.

FIG. 2 shows a front view of the secondary battery according to an embodiment of the disclosure.

FIG. 3A and FIG. 3B show partial cross-sectional views of the secondary battery according to an embodiment of the disclosure corresponding to a line X1-X1 in FIG. 2.

FIG. 4A shows a schematic top view of a current collector plate according to an embodiment of the disclosure.

FIG. 4B shows a cross-sectional schematic view of the current collector plate according to an embodiment of the disclosure.

FIG. 4C shows a cross-sectional schematic view of a cover plate according to an embodiment of the disclosure.

FIG. 5 shows a partially enlarged schematic view of a connection structure of the current collector plate with the cover plate and a side wall of a housing according to an embodiment of the disclosure.

FIG. 6 shows a partially enlarged schematic view of a welded portion of a first electrode tab, the current collector plate, and the cover plate of a secondary battery according to some embodiments of the disclosure.

FIG. 7A shows a schematic view of an electrode assembly with a flattened electrode tab structure.

FIG. 7B shows a cross-sectional schematic view of a single turn of a first electrode tab.

FIG. 8 shows a partially enlarged schematic view of a welded portion of a first electrode tab, a current collector plate, and a cover plate of a secondary battery according to another embodiment of the disclosure.

FIG. 9 shows a connection structure of an electrode assembly and a cover plate according to another embodiment of the disclosure.

FIG. 10A shows a schematic top view of a current collector plate according to another embodiment of the disclosure.

FIG. 10B shows a schematic cross-sectional view of a current collector plate according to another embodiment of the disclosure.

FIG. 10C shows a schematic cross-sectional view of a cover plate according to another embodiment of the disclosure.

FIG. 11 shows a schematic view when the electronic device of the embodiment of the disclosure is a vehicle.

## DESCRIPTION OF THE EMBODIMENTS

For better understanding of the spirit of the embodiments of the disclosure, the following provides further description in combination with some preferred embodiments of the disclosure.

The embodiments of the disclosure will be described in detail below. Throughout the specification of the disclosure, the same or similar components and components having the same or similar functions are represented by similar reference numerals. The embodiments described herein with respect to the drawings are illustrative, diagrammatic, and are provided for a basic understanding of the disclosure. The embodiments of the disclosure should not be construed as limitations on the disclosure.

As used herein, the terms "substantially," "generally," "essentially," and "approximately" are used to describe and account for small variations. When used in conjunction with an event or circumstance, the terms may refer to instances in which the event or circumstance occurs exactly as well as instances in which the event or circumstance occurs very approximately.

In this specification, unless specifically designated or limited otherwise, relative terms such as: "central," "longitudinal," "lateral," "front," "rear," "right," "left," "internal," "external," "lower," "higher," "horizontal," "vertical," "above," "below," "upper," "lower," "top," "bottom," and their derivative terms (such as "horizontally," "downwardly," "upwardly") should be interpreted as referring to the orientation described in the discussion or shown in the drawings. These relative terms are used merely for descriptive convenience and do not require that the disclosure be constructed or operated in a particular orientation.

For ease of description, terms such as "first," "second," "third" may be used herein to distinguish different components of one figure or a series of figures. Terms such as "first," "second," "third" are not intended to describe corresponding components.

Cylindrical battery is a type of secondary battery that has high energy density, therefore, cylindrical battery is widely applied in the lithium battery industry. The cylindrical battery structure includes electrode terminals, housing, current collector plates (including positive electrode current collector plate and negative electrode current collector plate), and electrode assembly. Usually, the current collector plate is first welded and connected to the electrode assembly, then the current collector plate is respectively welded and connected to the electrode terminal and housing to form the final electrical conduction effect.

After the current collector plate (for example, negative electrode current collector plate) is welded to the electrode assembly, the component needs to be connected to the housing. There are two existing connection methods: one is that the current collector plate directly connects to the housing for conduction, and the other is that the current collector plate is welded to the cover plate, then the cover plate is conductively connected to the housing. In the existing latter method, the welding of the current collector plate to the cover plate usually adopts laser penetration welding, that is, laser penetrates the cover plate and welds to the current collector plate below. This type of welding has high heat input and usually easily causes the separator below the weld mark to be damaged and burned. The damage to the separator causes contact between the positive and negative electrode sheets, resulting in battery short circuit.

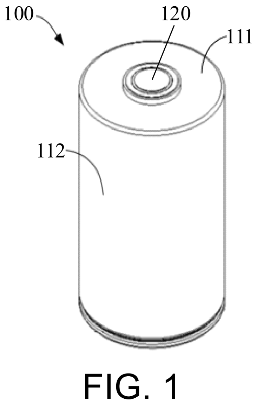

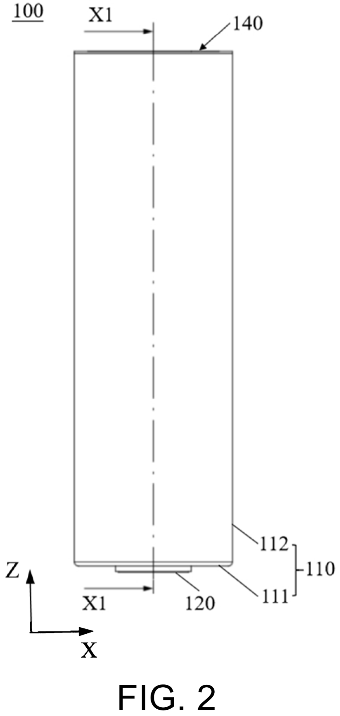

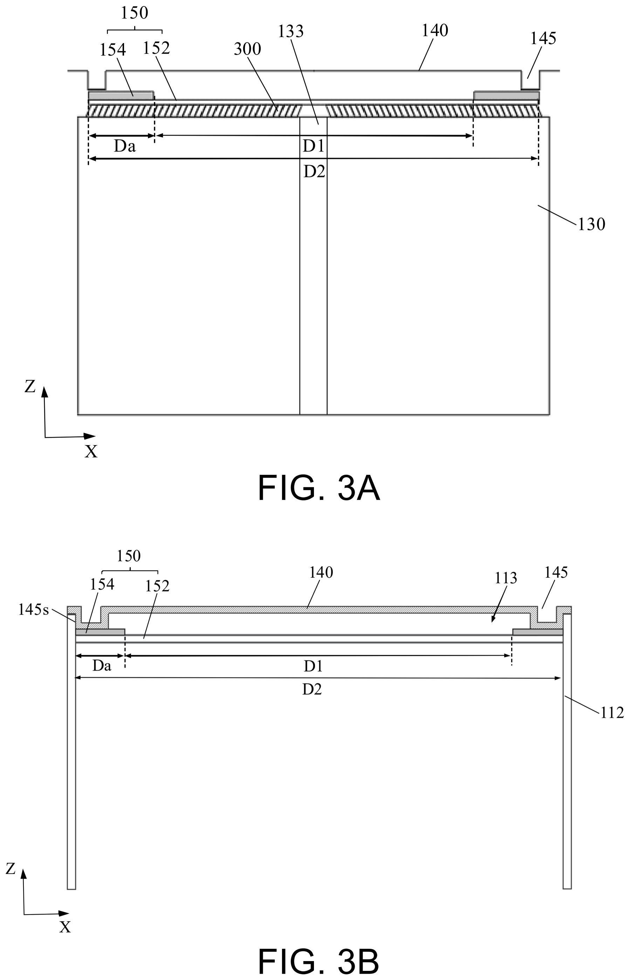

FIG. 1 shows a perspective view of a secondary battery 100 according to an embodiment of the disclosure. FIG. 2 shows a front view of the secondary battery 100 according to an embodiment of the disclosure. FIG. 3A and FIG. 3B show partial cross-sectional views of the secondary battery 100 according to an embodiment of the disclosure corresponding to a line X1-X1 in FIG. 2. FIG. 3A shows the connection structure of an electrode assembly 130 and a cover plate 140, and FIG. 3B shows the connection structure of a current collector plate 150 and the cover plate 140 and a side wall 112 of a housing.

In this embodiment, the secondary battery 100 is shown as a cylindrical battery for example. In some embodiments, the secondary battery 100 may be a 4680 cylindrical battery (diameter 46mm, height 80mm), or may be a 4695 cylindrical battery (diameter 46mm, height 95mm), or may be a 46120 cylindrical battery (diameter 46mm, height 120mm). The diameter here refers to the outer diameter dimension of the housing.

Referring to FIG. 1 to FIG. 3B, the secondary battery 100 includes an outer shell, and the outer shell includes a housing 110 and a cover plate 140. The housing 110 may specifically include an end wall 111 and a side wall 112 surrounding the end wall 111. As long as a stable sealing and electrical connection relationship can be formed, the connection between the end wall 111 and the side wall 112 may be implemented in various ways, for example, may be integral stamping forming, integral casting forming, or separate welding. The side wall 112 may surround in a cylindrical shape or surround along any other closed-loop contour that can match with the end wall 111. In this embodiment, the outer edge of the end wall 111 is circular, and the side wall 112 surrounds the outer edge of the end wall 111 in a cylindrical shape. One end of the side wall 112 opposite to the end wall 111 forms an opening 113, and the cover plate 140 covers the opening 113. The electrode assembly 130 is accommodated in an accommodation space defined by the housing 110 and the cover plate 140, and the accommodation space is used to accommodate the electrode assembly 130, electrolyte, and other necessary battery components.

The electrode pole 120 may penetrate through the end wall 111 and be insulated from the end wall 111. In some embodiments, the electrode pole 120 may be made of conductive metal material. For example, the material of the electrode pole 120 may be aluminum (Al). In some embodiments, the electrode pole 120 is a positive terminal of the secondary battery 100. Electrical insulation between the electrode pole 120 and the end wall 111 of the housing 110 may be implemented in various ways. For example, insulation may be implemented by placing an insulating washer assembly between the electrode pole 120 and the end wall 111.

Specifically, the outer diameter of the housing 110 may be determined according to the specific dimensions of the electrode assembly 130, for example, 18mm, 21mm, and 46mm. The material of the housing 110 may be various, for example, copper, iron, aluminum, steel, aluminum alloy. In order to prevent the housing 110 from rusting during long-term use, a layer of rustproof material such as metal nickel may also be plated on the surfaces of the housing 110 and the cover plate 140.

The electrode assembly 130 may be mainly formed by winding a first electrode sheet and a second electrode sheet, and a separator is disposed between the first electrode sheet and the second electrode sheet. The wound electrode assembly 130 may have a central through hole 133. The first electrode sheet may be one of a positive electrode sheet and a negative electrode sheet, and the second electrode sheet may be the other of the positive electrode sheet and the negative electrode sheet. The positive electrode sheet may include a positive electrode current collector and a positive electrode active material, and the positive electrode active material is coated on the surface of the positive electrode current collector; the positive electrode current collector may include a coated area coated with active material and an uncoated area not coated with active material, and the uncoated area forms a positive electrode tab of the electrode assembly 130 after winding. The negative electrode sheet includes a negative electrode current collector and a negative electrode active material, and the negative electrode active material is coated on the surface of the negative electrode current collector; the negative electrode current collector includes a coated area coated with active material and an uncoated area not coated with active material, and the uncoated area forms a negative electrode tab of the electrode assembly 130 after winding. Taking a lithium-ion secondary battery as an example, the material of the positive electrode current collector may be aluminum, the positive electrode active material layer includes positive electrode active material, and the positive electrode active material may be, for example, lithium cobalt oxide, lithium iron phosphate, ternary lithium or lithium manganese oxide. The material of the negative electrode current collector may be copper, the negative electrode active material layer includes negative electrode active material, and the negative electrode active material may be, for example, carbon or silicon. The material of the separator may be, for example, PP (polypropylene) or PE (polyethylene). To provide protection and insulation for the electrode assembly 130, an insulating film may also be wrapped around the exterior of the electrode assembly 130, and the insulating film may be synthesized from PP, PE, PET (polyethylene terephthalate), PVC (polyvinyl chloride) or other polymer materials.

The electrode assembly 130 may include a first electrode tab 300 facing the opening 113. In some embodiments, the first electrode tab 300 is a negative electrode tab of the electrode assembly 130. A current collector plate 150 is disposed between the cover plate 140 and the electrode assembly 130, and the first electrode tab 300 is connected to the side wall 112 of the housing 110 through the current collector plate 150. In some embodiments, the current collector plate 150 is a negative current collector plate. The electrode assembly 130 may also include a second electrode tab (for example, a positive electrode tab, not shown) facing the end wall 111, and the second electrode tab may be connected to the electrode pole 120 through another current collector plate (such as a positive current collector plate, not shown). The material of the current collector plate 150 may be, for example, copper, or nickel may also be plated on the surface of copper. The material of the cover plate 140 may be steel, for example, stainless steel or nickel-plated steel.

In this embodiment, the first electrode tab 300 is connected to the current collector plate 150 by weld, the current collector plate 150 is connected to the cover plate 140 by weld, and the cover plate 140 may be connected to the side wall 112 by weld at the end portion of the side wall 112 of the housing 110. Specifically, the current collector plate 150 includes a main body 152 welded to the first electrode tab 300, and a weld block 154 located on the side of the main body 152 facing the cover plate 140.

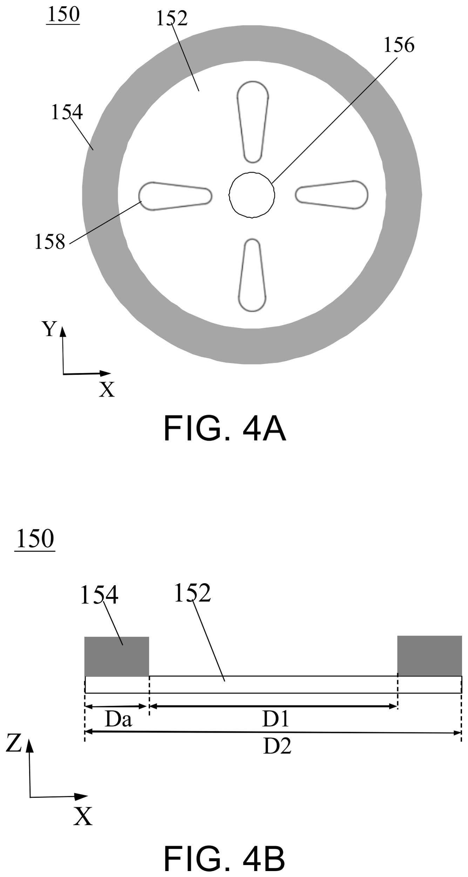

FIG. 4A shows a schematic top view of the current collector plate 150 according to an embodiment of the disclosure. FIG. 4B shows a schematic cross-sectional view of the current collector plate 150 according to an embodiment of the disclosure. Referring to FIG. 3A to FIG. 4B, in this embodiment, the current collector plate 150 is circular. The weld block 154 may be annular extending along the edge of the current collector plate 150.

The current collector plate 150 may have a center hole 156, and the center hole 156 may be arranged coaxially with the center through hole 133 of the electrode assembly 130. A plurality of penetrating grooves 158 may be arranged around the center hole 156. The penetrating grooves 158 penetrate the current collector plate 150 in the thickness direction of the current collector plate 150. Each penetrating groove 158 may extend longitudinally in the radial direction of the current collector plate 150. The shape of the penetrating grooves 158 shown in FIG. 4A is merely exemplary, and the penetrating grooves 158 may have any applicable shape, and the disclosure is not limited thereto. The center hole 156 and the penetrating grooves 158 may serve as gas discharge paths inside the secondary battery, and may be beneficial for the current collector plate 150 to open when the battery relieves pressure.

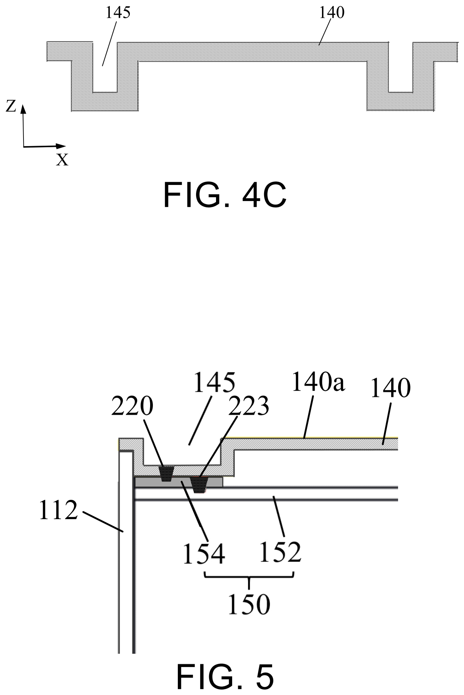

FIG. 4C shows a schematic cross-sectional view of the cover plate 140 according to an embodiment of the disclosure. Referring to FIG. 3A to FIG. 4C, the cover plate 140 includes a groove 145 recessed toward the current collector plate 150. The weld block 154 is welded between the bottom surface of the groove 145 and the main body 152 of the current collector plate 150. The groove 145 may be a hollow structure formed by stamping.

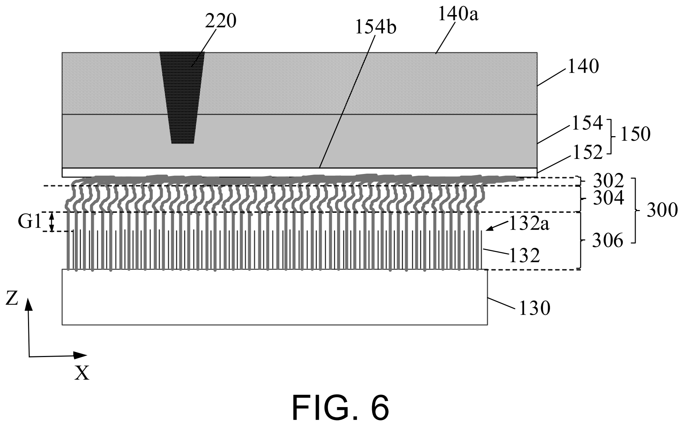

FIG. 5 shows a partially enlarged schematic view of the connection structure of the current collector plate 150 with the cover plate 140 and the side wall 112 of the housing according to an embodiment of the disclosure. FIG. 6 shows a partially enlarged schematic view of the welded portion of the first electrode tab, the current collector plate, and the cover plate of the secondary battery according to some embodiments of the disclosure. Further referring to FIG. 5 and FIG. 6, the current collector plate 150 includes a main body 152 welded to the first electrode tab 300, and a weld block 154 welded to the cover plate 140. In some embodiments, the cover plate 140 and the weld block 154 are welded by, for example, laser penetration welding. The welding direction of the weld block 154 and the cover plate 140 is from an outer surface 140a of the cover plate 140 facing away from the electrode assembly 130 toward the electrode assembly 130. The welding between the cover plate 140 and the weld block 154 forms a weld mark 220. The track of the weld mark 220 may extend along the circumferential direction of the cover plate 140. Specifically, the track may extend along the circumferential direction of the cover plate 140 within the groove 145. Since the welding direction of the weld block 154 and the cover plate 140 is from the outer surface 140a toward the electrode assembly 130, the width of the weld mark 220 gradually decreases in the direction from the outer surface 140a toward the electrode assembly 130. In addition, as shown in FIG. 6, the separator 132 of the electrode assembly 130 is disposed between the first electrode tabs 300, the end portion 132a of the separator 132 faces the cover plate 140, and a portion of the first electrode tab 300 exceeds the end portion 132a of the separator 132 along a height direction Z of the secondary battery.

In some embodiments, the thermal conductivity coefficient of the weld block 154 is W1, the thermal conductivity coefficient of the main body 152 is W2, and W2>W1. In some embodiments, the material of the weld block 154 is steel, and the material of the main body 152 is copper. In other embodiments, the materials of the weld block 154 and the main body 152 may also be other existing materials that respectively satisfy the above thermal conductivity coefficient relationship.

Since the welding direction of the weld block 154 and the cover plate 140 is from the outer surface 140a toward the electrode assembly 130, and the welding heat input is very high, the higher welding heat is transferred toward the electrode assembly 130, causing the separator to be easily damaged and burned. Considering that the thermal conductivity coefficient parameter has a significant impact on heat dissipation, the disclosure configures the thermal conductivity coefficient W1 of the weld block 154 to be less than the thermal conductivity coefficient W2 of the main body 152, so the weld block 154 with low thermal conductivity coefficient may be used to block heat conduction, reduce the heat conducted to the separator 132 during the welding process, reduce the heat reaching the separator 132, and lower the temperature at the separator 132 during the welding process, thereby avoiding the risk of separator burn during the welding process, and further avoiding battery short circuit.

In some embodiments, W2-W1≥300 W/(m·K), that is, the thermal conductivity coefficient W1 of the weld block 154 is at least 300 W/(m·K) lower than the thermal conductivity coefficient W2 of the main body 152. For example, in some embodiments, the material of the weld block 154 is steel, and the material of the main body 152 is copper. In other embodiments, the materials of the weld block 154 and the main body 152 may also be other existing materials that respectively satisfy the above thermal conductivity coefficient relationship. Configuring the thermal conductivity coefficient W1 of the weld block 154 to be at least 300 W/(m·K) lower than the main body 152 may effectively reduce the heat conducted to the separator 132 during the welding process, reduce the heat reaching the separator 132, and avoid the risk of separator burn during the welding process.

Specifically, in some embodiments, the weld block 154 may be stacked on a side of the main body 152 away from the electrode assembly 130. The cover plate 140 may be located on a side of the weld block 154 away from the main body 152. The weld mark 220 extends from the outer surface 140a of the cover plate 140 toward the main body 152, and the weld mark 220 does not exceed the bottom surface 154b of the weld block 154 facing the main body 152. The main body 152, the weld block 154, and the cover plate 140 are stacked and disposed above the electrode assembly 130, so that the main body 152 and the weld block 154 are jointly located between the electrode assembly 130 and the cover plate 140, which may further reduce the heat conducted to the separator 132 during the welding process, reduce the temperature at the separator 132 during the welding process, and avoid the risk of separator burn.

In the present embodiment, the cover plate 140 and the weld block 154, and the weld block 154 and the main body 152 are respectively welded through two welding processes. Therefore, in addition to the welding between the cover plate 140 and the weld block 154 forming the weld mark 220, the weld block 154 is further welded to the main body 152 and forms a weld mark 223. The weld block 154 and the main body 152 may be welded through, for example, a laser welding process. The welding direction of the weld block 154 and the main body 152 is from the outer surface of the weld block 154 facing away from the main body 152 toward the main body 152, and the weld mark 223 gradually decreases in width in the direction from the weld block 154 toward the main body 152.

Furthermore, in the present embodiment, the groove 145 of the cover plate 140 is located within the opening 113 at one end of the side wall 112. The outer wall 145s of the groove 145 faces the side wall 112 of the housing and fits with the side wall 112. This interference fit between the cover plate 140 and the housing is more favorable for assembling and pressing the cover plate 140 and the current collector plate 150.

The thickness of the cover plate 140 along the height direction Z is A. The thickness of the weld block 154 along the height direction Z is B, and the thickness of the main body 152 along the height direction Z is C. In some embodiments, according to design and assembly requirements, the range of the thickness A of the cover plate 140 may be 0.4mm to 0.8mm, and the range of the thickness C of the main body 152 may be 0.1mm to 0.2mm. In some embodiments, the thickness A of the cover plate 140 is less than or equal to the thickness B of the weld block 154 plus the thickness C of the main body 152, that is, A≤B+C. This may satisfy the manufacturability requirements of penetration welding from thin to thick.

As described with respect to FIG. 4A, the weld block 154 may be annular extending along the edge of the current collector plate 150. In such embodiments, the inner diameter of the weld block 154 is D1, the outer diameter is D2, and D3 represents the outer diameter of the electrode assembly 130. In some embodiments, the inner diameter D1 of the weld block 154 satisfies D1/D3>0.75. This ensures that the welding between the main body 152 and the first electrode tabs 300 may weld all electrode tabs along the radial direction. If the main body 152 cannot weld with all the first electrode tabs 300 along the radial direction, it may cause DCIR (Direct Current Internal Resistance) to be excessively high. Furthermore, the minimum value of the outer diameter D2 of the weld block 154 is D4-2×A, where D4 represents the inner diameter of the side wall 112 of the housing 110, and A is the thickness of the cover plate 140. In some embodiments, for 46 series cylindrical batteries, D4 is 46mm, and the range of A may be 0.4mm to 0.8mm. The above minimum value of the outer diameter D2 of the weld block 154 enables the outer edge of the weld block 154 to be located below the outer wall 145s of the groove 145. If the outer diameter D2 is less than the above minimum value, laser penetration welding may weld outside the weld block 154.

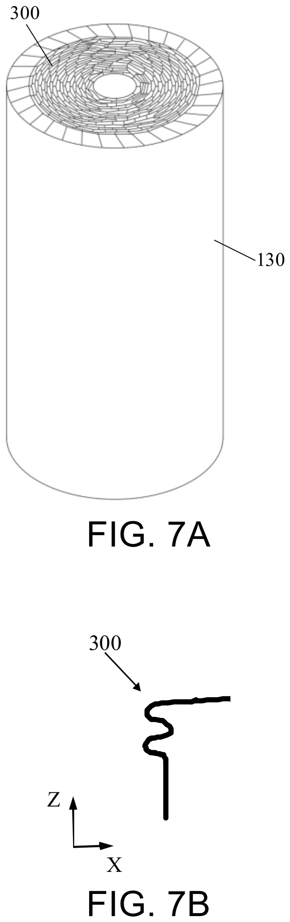

Referring to FIG. 6, according to embodiments of the disclosure, the first electrode tab 300 adopts a flattened electrode tab structure. That is, after winding the first electrode sheet, separator and second electrode sheet, the first electrode tab is flattened and shaped (without cutting the first electrode tab). FIG. 7A shows a schematic view of an electrode assembly with a flattened electrode tab structure. For the first electrode tab 300 with flattened structure, the first electrode tab 300 has more stacked layers, so a single turn of electrode tab may stack at least 3 layers in the height direction Z, therefore after multiple turns of electrode tabs are stacked, the number of stacked layers of the first electrode tab 300 along the height direction Z may be more than 10 layers.

FIG. 7B shows a schematic cross-sectional view of a single turn of the first electrode tab. As shown in FIG. 7B, the quantity of stacked layers of a single turn of the first electrode tab 300 in the height direction Z is at least 3 layers. Therefore, referring again to FIG. 6, in the area where the first electrode tab 300 is welded to the main body 152 of the current collector plate 150, the number of stacked layers of each turn of the first electrode tab 130 in the height direction Z is at least 3 layers. Compared to cut and stacked electrode tabs (after winding, the electrode tabs are cut and then reshaped), for the same length of uncoated area of the first current collector, since the flattened electrode tab has more stacked layers, the height along the height direction Z may be greater, and the end portion 132a of the separator 132 may be farther from the welding surface between the first electrode tab 300 and the main body 152, thereby reducing the heat exposure to by the separator 132 and avoiding separator burn.

Specifically, in the height direction Z, the first electrode tab 300 sequentially includes a dense area 302 welded to the main body 152, a loose area 304 connected to the dense area 302, and a straight area 306 connected to the loose area 304. The first electrode tab 300 in the straight area 306 extends vertically along the height direction Z. The first electrode tab 300 in both the dense area 302 and the loose area 304 are bent multiple times to form multiple layer stacking along the height direction Z. The dense area 302 may contact the flattening roller during the flattening process, so the current collector foil material adheres most tightly with high density. Therefore, along the height direction Z, the number of stacked layers of the first electrode tab 300 in the loose area 304 is less than the number of stacked layers of the first electrode tab 300 in the dense area 302, that is, the electrode tab stacking density of the loose area 304 is less than the electrode tab stacking density of the dense area 302. It should be understood that small electrode tab stacking density means there may be more gaps between electrode tabs in the loose area 304, and large electrode tab stacking density means the electrode tabs in the dense area 302 are stacked more densely with fewer gaps. By adopting the flattened electrode tab structure, the electrode tab stacking density of the dense area 302 welded to the main body 152 may be greater, which may be beneficial for welding. On the other hand, since the electrode tab stacking density in the loose area 304 is smaller, there are more gaps between electrode tabs, and the gaps may play an insulating role, so the more gaps in the loose area 304 may further block heat transfer to the separator 132, avoiding separator burn.

In some embodiments, the end portion 132a of the separator 132 is located below the loose area 304 of the first electrode tab 300, and the end portion of the straight area 306 facing the main body 152 exceeds the end portion 132a of the separator 132 by a distance G1. In some embodiments, the distance G1>0.1mm. That is, the distance between the end portion 132a of the separator 132 and the loose area 304 is greater than 0.1mm. Since the spacing between electrode tabs in the area corresponding to G1 may also play an insulating role, forming a spacing greater than 0.1mm between the end portion 132a of the separator 132 and the loose area 304 provides further insulating effect, further preventing separator burn.

In some embodiments, the quantity of stacked layers of the first electrode tab 300 in the dense area 302 is 15 layers to 45 layers. The number of stacked layers of the first electrode tab 300 in the loose area 304 is 15 layers to 30 layers. It should be understood that the number of stacked layers in the dense area 302 and the loose area 304 here refers to the total number of layers of multiple turns of electrode tab stacking. The above-mentioned greater number of stacked layers in the dense area 302 enables the dense area 302 to have an electrode tab stacking density that is more beneficial for welding.

In some embodiments, the total height of the flattened first electrode tab 300 along the height direction Z is H. H is greater than or equal to 2mm. The height of the loose area 304 along the height direction Z is H1, and the height of the dense area 302 along the height direction Z is H2. In some embodiments, the range of H1/H may be 45% to 55%, and the range of H2/H may be 10% to 15%. That is, the height of the loose area 304 accounts for 45% to 55% of the total height of the first electrode tab, and the height of the dense area 302 accounts for 10% to 15% of the total height of the first electrode tab. In one example, the range of H1 may be 0.5mm to 1mm, and the range of H2 may be 0.1mm to 0.3mm. The total height H of the first electrode tab 300 being greater than or equal to 2mm may provide a larger height space for insulation, and combined with the above height range configuration in the dense area 302 and the loose area 304, the dense area 302 with a relatively small height proportion may have a density more beneficial for welding, while the spacing in the loose area 304 with a relatively large height proportion is sufficient to provide an effective insulating effect.

In some embodiments, a high-speed multiple welding method may be adopted for welding. To meet overcurrent requirements, there are usually certain requirements for the width of the weld mark 220. If the width requirement is achieved through single welding, the welding heat is large, which causes excessive welding heat to transfer downward to the separator, easily causing separator burn. This application achieves the required width of the weld mark 220 by adopting a high-speed multiple welding method, so the heat during each welding is low, which may avoid separator burn. In some embodiments, the minimum width of the weld mark 220 formed by the high-speed multiple welding method in the radial direction is greater than or equal to 0.5mm to meet overcurrent requirements and strength needs. The maximum width of the weld mark 220 may be less than 1mm. If the maximum width of the weld mark 220 is greater than 1mm, the welding time is longer, the heat input is large, and the welding efficiency is low.

Specifically, in the high-speed multiple welding method, in terms of welding equipment selection, a fiber laser with a core diameter of 14 micrometers may be selected, which has a thin fiber and high power density, thereby making it easier to form deep weld mark and reducing heat transfer. In terms of trajectory selection, an independent line design may be selected, with each line adding ≥50ms jump time to reduce continuous heat input. In terms of welding parameter selection, the welding speed may be selected as ≥500mm/s to reduce heat input time. And 0 focus is selected to form the maximum power density spot, which is beneficial for forming deep weld mark.

In some embodiments, the minimum value of the weld mark depth of the weld mark 220 in the height direction Z should be greater than or equal to 50 micrometers. Also, the maximum value of the weld mark depth should be less than or equal to 2/3 of the thickness B of the weld block 154 (2/3B). If the depth of the weld mark is greater than 2/3B, then the configuration causes excessive welding heat to transfer downward to the separator, easily causing separator burn.

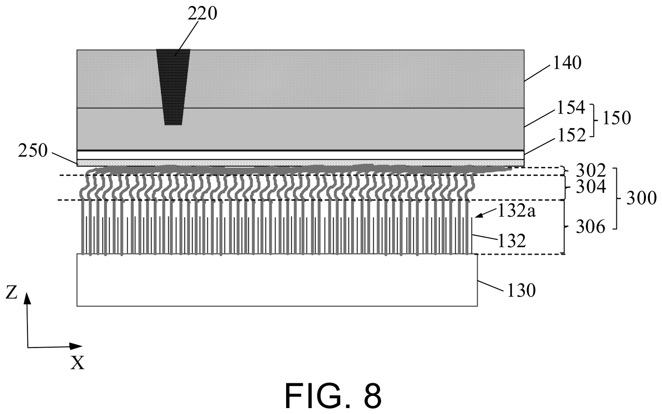

FIG. 8 shows a partially enlarged schematic view of the welded portion of the first electrode tab, the current collector plate, and the cover plate of a secondary battery according to another embodiment of the disclosure. The difference in the embodiment shown in FIG. 8 lies in that an insulating adhesive layer 250 may be disposed between the main body 152 of the current collector plate 150 and the first electrode tab 300. Also, the insulating adhesive layer 250 is located below the weld block 154, and the projection of the weld block 154 along the height direction Z is located on the insulating adhesive layer 250. In some embodiments, the material of the insulating adhesive layer 250 may be PI (polyimide) material. The thickness range of the insulating adhesive layer 250 may be, for example, greater than or equal to 67 micrometers. In some embodiments, the thermal conductivity coefficient of the insulating adhesive layer 250 is less than 0.05 W/(m·K). By disposing such an insulating adhesive layer 250 with low thermal conductivity coefficient between the main body 152 and the first electrode tab 300, the welding heat may be further blocked from diffusing to the separator 132.

In some embodiments, the width of the insulating adhesive layer 250 in the radial direction is Da-1mm to Da+1mm, where Da represents the width of the weld block 154 in the radial direction, and a unit of Da is millimeter. Da may equal (D2-D1)/2 (for example, see FIG. 4B). This width range of the insulating adhesive layer 250 may enable the insulating adhesive layer 250 to cover a sufficiently large area below the weld block 154 to block the welding heat from conducting to the separator when the weld block 154 is welded to the cover plate 140.

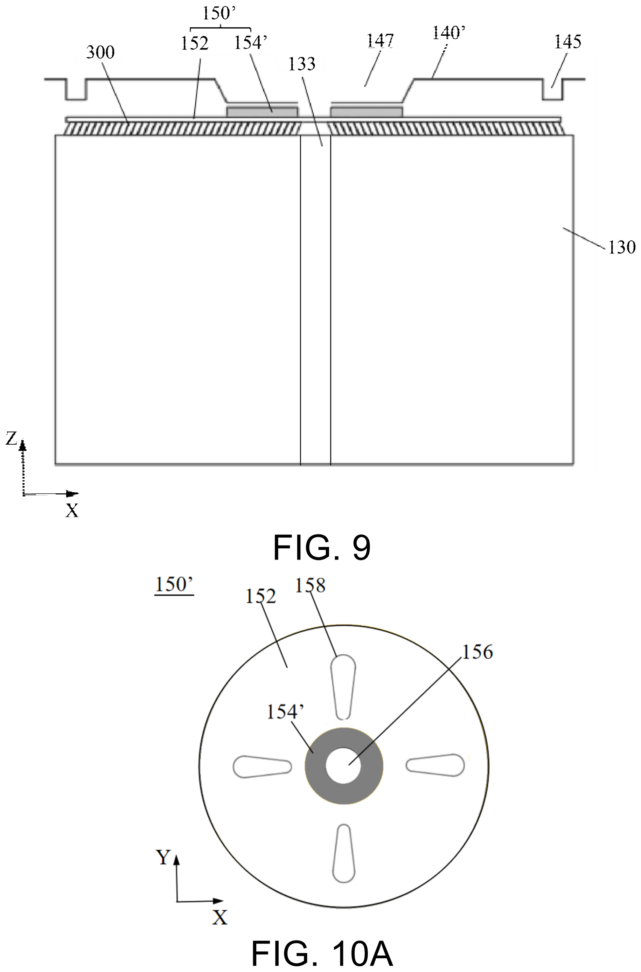

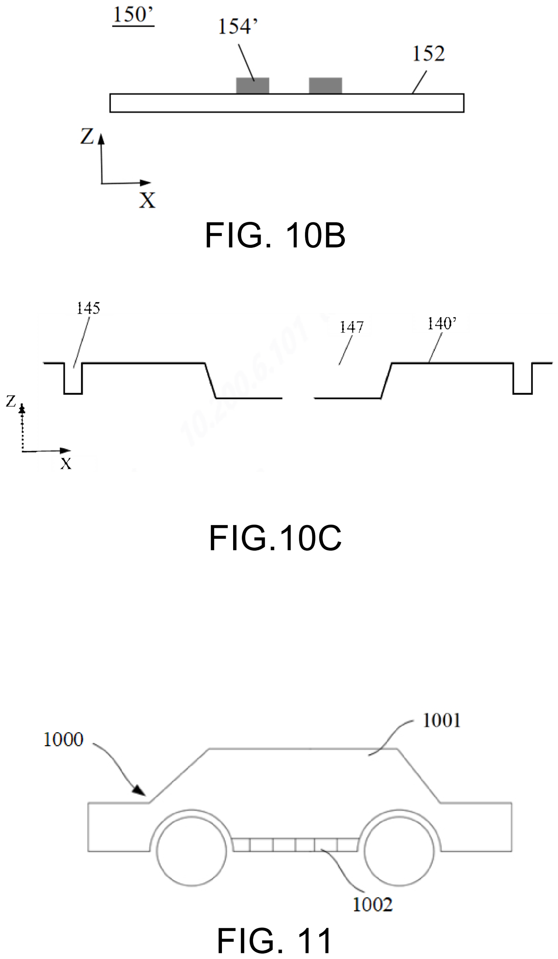

FIG. 9 shows a connection structure of the electrode assembly 130 and the cover plate 140' according to another embodiment of the disclosure. FIG. 10A shows a schematic top view of the current collector plate 150' according to another embodiment of the disclosure. FIG. 10B shows a schematic cross-sectional view of the current collector plate 150' according to another embodiment of the disclosure. FIG. 10C shows a schematic cross-sectional view of the cover plate 140' according to another embodiment of the disclosure.

Referring to FIG. 9 to FIG. 10C, in this embodiment, the weld block 154' of the current collector plate 150' is connected between the center area of the cover plate 140' and the main body 152. The center area of the cover plate 140' has a recess 147 that is recessed toward the electrode assembly 130 side, and the weld block 154' may be welded below the bottom surface of the recess 147. The weld block 154' is annular to expose the center hole 156 on the main body 152 of the current collector plate 150'. In the embodiment shown in FIG. 9 to FIG. 10C, the welding method between the main body 152 of the current collector plate 150' and the first electrode tab of the electrode assembly 130 is the same as described above with reference to FIG. 5 to FIG. 6, so details will not be repeated here.

Referring to FIG. 11, this disclosure provides an electronic device 1000. For convenience of description, the following embodiments take the electronic device 1000 as a vehicle for illustration. A battery pack 1002 is disposed inside the vehicle, and the battery pack 1002 may be disposed at the bottom or head or tail of the vehicle body 1001. The battery pack 1002 may be used for power supply of the vehicle. For example, the battery pack 1002 may serve as an operating power source of the vehicle. A working part of the electronic device 1000 is electrically connected to the battery pack 1002 to obtain electrical energy support. The vehicle may be a fuel vehicle, a gas vehicle, or a new energy vehicle. The new energy vehicle may be a pure electric vehicle, a hybrid vehicle, or a range-extended vehicle, but the disclosure is not limited thereto. The working part is the vehicle body, the battery pack 1002 is disposed at the bottom of the vehicle body, and provides electrical energy support for the driving of the vehicle or the operation of electrical components in the vehicle. However, in some other embodiments, the electronic device 1000 may also be, for example, a mobile phone, a portable device, a laptop computer, a ship, a spacecraft, an electric toy, an electric tool. The spacecraft includes, for example, aircraft, rockets, space shuttles, spaceships. The working part may obtain electrical energy from the battery pack 1002 and perform corresponding work unit components, such as fan blade rotation units, vacuum cleaner suction working units. Electric toys include fixed or mobile electric toys, for example, game machines, electric car toys, electric ship toys, electric airplane toys. Electric tools include metal cutting electric tools, grinding electric tools, assembly electric tools, and railway electric tools, for example, electric drills, electric grinders, electric wrenches, electric screwdrivers, electric hammers, impact drills, concrete vibrators, electric planers. The embodiments of this application do not impose special restrictions on the above electronic device 1000.

**Claims**

1. A secondary battery (100), comprising:

   an outer shell comprising a housing (110) and a cover plate (140), wherein an end of the housing (110) forms an opening (113), and the cover plate (140) covers the opening (113);
   an electrode assembly (130) accommodated in the outer shell, wherein the electrode assembly (130) comprises a first electrode sheet, a separator (132), and a second electrode sheet that are stacked and wound in sequence, the first electrode sheet has a first electrode tab (300) facing the cover plate (140), and a portion of the first electrode tab (300) exceeds an end portion (132a) of the separator (132) facing the cover plate (140) along a height direction (Z) of the secondary battery (100); and
   a current collector plate (150) disposed between the cover plate (140) and the electrode assembly (130), wherein the current collector plate (150) comprises a main body (152) welded to the first electrode tab (300) and a weld block (154) welded to the cover plate (140), a welding direction of the weld block (154) and the cover plate (140) is from an outer surface (140a) of the cover plate (140) toward the electrode assembly (130), a thermal conductivity coefficient of the weld block (154) is W1, a thermal conductivity coefficient of the main body (152) is W2, and W2 is greater than W1.

2. The secondary battery (100) according to claim 1, wherein

$$W2\text{-}W1 \geq 300 \ W/(m \cdot K).$$

3. The secondary battery (100) according to claim 1, wherein
the weld block (154) is stacked on a side of the main body (152) away from the electrode assembly (130), and a weld mark (220) formed by welding the cover plate (140) and the weld block (154) does not exceed a bottom surface (154b) of the weld block (154) facing the main body (152).

4. The secondary battery (100) according to claim 3, wherein

   a track of the weld mark (220) extends along a circumferential direction of the cover plate (140), a minimum width in a radial direction of the secondary battery (100) is greater than or equal to 0.5mm, and a maximum width is less than 1mm; and/or
   a thickness of the cover plate (140) is A, a thickness of the weld block (154) along the height direction (Z) is B, a thickness of the main body (152) is C, and A≤B+C.

5. The secondary battery (100) according to claim 1, wherein
a material of the weld block (154) is steel, and a material of the main body (152) is copper.

6. The secondary battery (100) according to claim 1, wherein
in a region where the first electrode tab (300) is welded to the current collector plate (150), a quantity of stacked layers of the first electrode tab (300) in the height direction (Z) is at least 3 layers for each turn.

7. The secondary battery (100) according to claim 1, wherein

in the height direction (Z), the first electrode tab (300) sequentially comprises a dense area (302) welded to the main body (152), a loose area (304) connected to the dense area (302), and a straight area (306) connected to the loose area (304), the first electrode tab (300) in the straight area (306) extends along the height direction (Z), and an electrode tab stacking density of the loose area (304) is less than an electrode tab stacking density of the dense area (302).

8. The secondary battery (100) according to claim 7, wherein
in the height direction (Z), an end portion of the straight area (306) facing the main body (152) exceeds the end portion (132a) of the separator (132), and a distance that the end portion of the straight area (306) exceeds the end portion (132a) of the separator (132) is greater than 0.1mm.

9. The secondary battery (100) according to claim 7, wherein
a height of the first electrode tab (300) along the height direction (Z) is greater than or equal to 2mm, a ratio of a height of the loose area (304) to the height of the first electrode tab (300) is 45% to 55%, and a ratio of a height of the dense area (302) to the height of the first electrode tab (300) is 10% to 15%.

10. The secondary battery (100) according to claim 7, wherein
a quantity of stacked layers of the first electrode tab (300) in the dense area (302) is 15 layers to 45 layers.

11. The secondary battery (100) according to claim 1, comprising:
an insulating adhesive layer (250) disposed between the main body (152) of the current collector plate (150) and the first electrode tab (300), a projection of the weld block (154) along the height direction (Z) is located on the insulating adhesive layer (250), and a thermal conductivity coefficient of the insulating adhesive layer (250) is less than 0.05 W/(m·K).

12. The secondary battery (100) according to claim 11, wherein
a width of the insulating adhesive layer (250) in a radial direction of the secondary battery (100) is Da-1mm to Da+1mm, where Da represents a width of the weld block (154) in the radial direction, and a unit of Da is millimeter.

13. The secondary battery (100) according to claim 1, wherein
the housing (110) comprises a side wall (112) surrounding the electrode assembly (130), an end of the side wall (112) is the opening (113), the cover plate (140) comprises a groove (145) recessed toward the current collector plate (150), the groove (145) is located within the opening (113), and an outer wall (145a) of the groove (145) faces the side wall (112) of the housing (110) and fits with the side wall (112), wherein the weld block (154) is welded between the groove (145) and the main body (152).

14. The secondary battery (100) according to claim 13, wherein
the weld block (154) is annular extending along an edge of the current collector plate (150), a thickness of the cover plate (140) is A, an inner diameter of the side wall (112) of the housing (110) is D4, a minimum value of an outer diameter of the weld block (154) is equal to D4-2×A, an inner diameter of the weld block (154) is D1, an outer diameter of the electrode assembly (130) is D3, and D1/D3>0.75.

15. A battery pack (1002), comprising the secondary battery (100) according to any one of claims 1-14.

FIG. 1

FIG. 2

FIG. 3A

FIG. 3B

FIG. 4A

FIG. 4B

FIG. 4C

FIG. 5

FIG. 6

FIG. 7A

FIG. 7B

FIG. 8

FIG. 9

FIG. 10A

FIG. 10B

FIG.10C

FIG. 11

## EUROPEAN SEARCH REPORT

**Application Number**

EP 25 22 3286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 198 665 A (NINGDE CONTEMPORARY AMPEREX TECH CO LTD) 14 June 2024 (2024-06-14) | 1-6,11, 12,15 | INV. H01M50/107 H01M50/152 |
| Y | * the whole document * | 7-10,13, 14 | H01M50/169 H01M50/533 H01M50/536 |
| Y | US 2024/332547 A1 (STERN RAINER [DE] ET AL) 3 October 2024 (2024-10-03) * paragraph [0192] * * figure 1 * | 7-10 | H01M50/538 |
| Y | WO 2024/197452 A1 (CONTEMPORARY AMPEREX TECHNOLOGY CO LTD [CN]) 3 October 2024 (2024-10-03) * the whole document * | 13,14 | |

**TECHNICAL FIELDS
SEARCHED     (IPC)**

H01M

The present search report has been drawn up for all claims

| Place of search | Date of completion of the search | Examiner |
|---|---|---|
| The Hague | 23 April 2026 | Kreissl, Franz |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...........................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 22 3286

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2026

| Patent document cited in search report | | Publication date | Patent family member(s) | | Publication date |
|---|---|---|---|---|---|
| CN 118198665 | A | 14-06-2024 | CN | 118198665 A | 14-06-2024 |
| | | | CN | 222233692 U | 24-12-2024 |
| | | | EP | 4664582 A1 | 17-12-2025 |
| | | | KR | 20250145078 A | 13-10-2025 |
| | | | US | 20260011885 A1 | 08-01-2026 |
| | | | WO | 2024221747 A1 | 31-10-2024 |
| US 2024332547 | A1 | 03-10-2024 | CN | 118056329 A | 17-05-2024 |
| | | | EP | 4164049 A1 | 12-04-2023 |
| | | | JP | 2024539757 A | 30-10-2024 |
| | | | KR | 20240074795 A | 28-05-2024 |
| | | | US | 2024332547 A1 | 03-10-2024 |
| | | | WO | 2023057113 A1 | 13-04-2023 |
| WO 2024197452 | A1 | 03-10-2024 | CN | 119497932 A | 21-02-2025 |
| | | | EP | 4641816 A1 | 29-10-2025 |
| | | | KR | 20250078530 A | 02-06-2025 |
| | | | US | 2025273747 A1 | 28-08-2025 |
| | | | WO | 2024197452 A1 | 03-10-2024 |

EPO FORM P0459

For more details about this annex : see Official Journal of the European Patent Office, No. 12/82